# EUROPEAN PATENT APPLICATION

(11) **EP 1 965 318 A2**
(43) Date of publication of application: **03.09.2008**
(21) Application number: 08102094.3
(22) Date of filing: 27.02.2008
(51) Int. Cl.: G06F 17/30

(54) **Method of assisting users in detection and correction of errors in complex database**

(30) Priority: 28.02.2007 US 892128 P; 22.01.2008 US 17443
(71) Applicant: Honeywell International Inc., Morristown, NJ 07962 (US)
(72) Inventor: Zhang, Kang, Phoenix, AZ 85032 (US); Folko, Timothy J., Glendale, AZ 85034 (US); van der Zweep, Jeff J., Peoria, AZ 85383 (US)
(74) Representative: Buckley, Guy Julian

(57) **Abstract**

A method and system for conflict detection during construction of complex databases, such as a data model for driving or modeling a complex system. Components of a data model may be defined in rules that specify objects of various types and containing various elements. The rules are declarative, and may be stored on a computer-readable storage medium. Rule declarations or assertions include element definitions, values or ranges of values, inclusion requirements, and severity level conditions in the event that conflicts or errors are detected. Conflict checking takes account of compliance with type definitions, as well as a user identity and a phase of construction of the data model.

## Description

### RELATED APPLICATION

This Application claims the benefit of priority to U.S. Provisional Application 60/892,128 filed February 28, 2007, which is hereby incorporated by reference herein.

### FIELD OF THE INVENTION

The present invention relates to user entry of data in complex databases, and more particularly to assisting users in detecting and correcting errors in data entered in complex databases.

### BACKGROUND

Data entered into a repository, such as a file or database, may take on various forms, and serve various functions. For instance, data may take on the form of text, numbers, or computer program instructions. Other forms are possible as well. Examples of functions served by data in a repository include simple presentation as text to be read by a human, parameters and variables that serve as inputs to computer programs or drive program logic, parameters and variables that serve as input to drive complex operations (such as the operation of an aircraft), and executable instructions that are carried out by a computer processor. Other examples are possible as well. Thus both the complexity of the data and the complexity of its functional purposes may vary.

A repository itself may take on various forms. For instance, a simple text file may be used to store text-only data. A word-processing file may include text and formatting commands, and include elements that are cross-referenced at multiple locations throughout the file. A database may be built according to complex schemas and other data definitions. Databases may also include interrelationships and links between multiple, different data tables. Conventionally, databases and other files may be stored on machine-readable media, such as magnetic disk, optical disk, or other known or emerging technologies. However, other methods, means, and modes of storage are possible as well.

Because data in a repository must initially be created and entered therein, it may be subject to various types and forms of error and/or anomalies or violations of rules. For example, text data may be subject to typographical errors, and numerical data may be subject to computational errors or be assigned values that fall outside of one or more allowable ranges. Other types of errors are possible as well. Correspondingly, errors in data may lead to errors in functional operation that is driven by or dependent (at least in part) on the data. Thus, the severity of errors in data, as well as the severity of errors in functional and/or operational outcomes that may depend on data and/or the degree of integration of those items, may vary.

### SUMMARY

Detection of errors of data entered into complex databases can be extremely difficult to accomplish because reliable methods of preventing or predicting these data errors are generally lacking. Data errors can originate from unexpected sources, and manifest themselves in unexpected ways. High levels or degrees of data complexity often require expensive and error-prone processes to ensure such data are consistent, complete, and accurate. In addition, there may be discrepancies, misunderstandings, and variations in the interpretation of requirements of systems that use the data (or to which the data are applied, for example). This, in turn, often requires that an expert (or experts) with special knowledge has to help to ensure the data's accuracy and clarify its meaning and intended use. Detection and correction of data errors as soon as possible with respect to the point of creation and/or entry (such as, during data entry time) can help avoid extremely expensive rework. A formal method may help reveal potentially inconsistent data during the data-entry and/or integration process.

Accordingly, embodiments of the present invention provide a method and system of assisting users in detection and correction of errors in complex databases. More particularly, a method is disclosed for applying data-driven conflict detection logic to data entry processes or steps and data entry results. Data entry processes or steps comprise user entry via user interfaces, such as computer input devices (e.g., keyboards), and other data entry means, such as automatic and/or programmed data importation, among other possibilities. The method and system are particularly well-suited for building data models that may be used to model or drive operation of complex systems, such as an aircraft or a telecommunication switch, to name just two examples.

Hence, in one respect, embodiments of the present invention provide a method of constructing a data model for modeling a complex system. In accordance with a preferred embodiment, the data model will comprise a plurality of objects that are stored on a computer-readable storage medium. The method comprises the steps of specifying parametric data of a parameter-driven rule, rendering a first object of a defined type by a user, applying the parameter-driven rule to the first object to determine a build state of the first object, and responsive to determining that the build state of the first object corresponds to a requisite build state, modifying the data model stored on the computer-readable storage medium by integrating the first object into the data model. Preferably, the parametric data will be stored on the computer-readable storage medium, and the first object will include both a particular identifier and information used by the data model. Further the defined type of the first object will be specified in the parameter-driven rule in accordance with the parametric data. Determination of the build state of the first object will depend on (i) a state of compliance of the first object with the parameter-driven rule, (ii) an identity of the user, and (iii) a state of the data model.

In practice, the method may be implemented as computer-executable conflict detection logic that can specify what data entry processes or steps and data entry results should be checked for errors and/or anomalies or violations, when they should be checked, what levels of severity of violations are possible, and what severity of violations are actually discovered during any particular application (i.e., invocation) of the logic. The logic may also determine specific actions that should be taken in the event that errors, anomalies, and/or violations are detected. Such actions could include prevention of user data entry, warnings and/or notifications to users about a detected error, anomaly, or violation, and possible corrective steps that the logic or that a user may take to correct a detected error, anomaly, or violation. Other actions are possible as well.

The parametric data provides for a data-driven aspect of the method, and supports a framework for customizable definitions, conditions, and events that cause the conflict detection logic to be applied in an application-specific or a case-specific manner to one or more particular data entry processes or steps and/or data entry results (e.g., specific files or file types, databases, etc.). The definitions, conditions, and events comprise constructs called assertions. A general assertion framework enables users to create specific assertions, each assertion being defined to apply to one or more specific data entry processes or steps and/or data entry results that are to subject the conflict detection logic. Each assertion is comprised of one or more attributes for defining such properties as error conditions, severity level(s), and action(s) to take. Thus, a generic set of logic rules carried out by the conflict detection logic is customized to particular data entry processes or and/or data entry results by creating a set of assertions, and customizing the attributes of the assertions according user-determined requirements.

In further accordance with the preferred embodiment, the conflict detection logic may be implemented as so-called "plug-n-play" software functions that can be easily replaced or interchanged with different software functions to meet changed requirements, without having impact on other parts of the system under consideration.

In another respect, embodiments of the present invention provide a computer system for constructing a data model for modeling a complex system. In accordance with a preferred embodiment, the computer system comprises a processor and a computer-readable storage medium, and the data model comprises a plurality of objects and is stored on the computer-readable storage medium. Further, the computer system includes means for specifying parametric data of a parameter-driven rule for determining a build state of objects of a given type, means for defining the parameter-driven rule, means for rendering a first object of the given type by a user, means for applying the parameter-driven rule to the first object to determine a build state of the first object, and means making a determination that the build state of the first object corresponds to a requisite build state, and responsive to making the determination, modifying the data model stored on the computer-readable storage medium by integrating the first object into the data model. Preferably, the parametric data will be stored on the computer-readable storage medium. Further, the given type of the first object will be specified in the parameter-driven rule in accordance with the parametric data, and the parameter-driven rule (i) will be implemented as computer-executable software stored separately from the parametric data on the computer-readable storage medium, and (ii) comprise machine-language instructions for carrying out logical steps in accordance with information contained in the parametric data. Moreover, the build state of the first object will depend on (i) a state of compliance of the first object with the parameter-driven rule, (ii) an identity of the user, and (iii) a state of the data model.

These as well as other aspects, advantages, and alternatives will become apparent to those of ordinary skill in the art by reading the following detailed description, with reference where appropriate to the accompanying drawings. Further, it should be understood that this summary and other descriptions and figures provided herein are intended to illustrate the invention by way of example only and, as such, that numerous variations are possible. For instance, structural elements and process steps can be rearranged, combined, distributed, eliminated, or otherwise changed, while remaining within the scope of the invention as claimed.

### BRIEF DESCRIPTION OF THE DRAWINGS

Figure 1 is a flowchart illustrating an exemplary embodiment of a conflict detection method.
Figure 2 illustrates exemplary entity rules, including element definitions and assertions.
Figure 3 illustrates a revision of an object-type definition in accordance with information contained in a rendered object.
Figure 4 illustrates an exemplary entity rule for an alternative embodiment of the conflict detection method and system.

### DETAILED DESCRIPTION

A complex system, such as an aircraft, is typically constructed from functional elements that act individually and in concert in the service of making the complex system "work." The functional elements carry out internal actions and operations and interact with other functional elements through external actions and communication of information. A particularly useful way to characterize a complex system is through a data model. For a given complex system, a data model captures quantitative aspects of the system. As such, a data model may be used to model a complex system, including its overall operation and the interactions and interdependencies of its constituent components.

In quantifying a complex system, a data model can both represent an abstraction of the system, as well as serve as a repository for quantitative data that drives system operation. A data model is usually constructed of data elements or objects that represent functional elements of the complex system. Objects of the data model incorporate interactions and interdependencies of the complex system through interactions and interdependencies between objects and data contained in the objects. In practice, a data model may be implemented in the form of a database, an XML file, or similar organization of data, and stored on a computer-readable storage medium. Objects of a data model may be data structures, database records or tables, text files, or segments of text files, among other possibilities. In addition to containing data, such as defined variables, constants, and assigned numeric and character-string values, complex data models and their constituent objects may also contain computer-executable software programs and/or logical pointers to locations in computer-readable storage media containing such software programs.

The interactions and interdependencies between objects and object-data of a data model may be both operational and definitional in nature. Operational interactions and interdependencies generally model interactions and interdependencies within the complex system and its constituent elements. For example, values of a voltage in one functional element may directly effect positions of a motor shaft in another. Definitional interactions and interdependencies are more related to requirements for consistency of values, ranges of values, or variable and parameter types of the data model itself, for example.

Data value assignments must be made for all objects of a data model as part of the design and construction process. Ensuring definitional consistency among all objects and elements of the model, as well as preventing or correcting errors in the assignments, becomes a complex task in its own right, and has particular impact on how and even if assignments of elements can be made. There may be various sources of inconsistencies and/or errors during the assignment process. For instance, at the time an assignment is made, the existence of a particular interdependency between two elements may be known, but a proper characterization of the interdependency may not. Consequently, the knowledge required for a correct assignment may not be available when the assignment is made. Yet, the absence of an assignment could delay a critical design phase of the data model.

Thus, beyond even identifying all of the interactions and interdependencies of a data model, the nature of each interaction and interdependency must be determined. An additional complicating factor may arise because the nature of each interaction and interdependency may change depending on the phase of design and development of the overall data model, or even of the system and/or subsystems that it models. For instance, a known inconsistency between two or more elements during an early phase of design and development may be of little or no consequence, whereas during a later phase the same inconsistency could yield undesirable effects or even disable the system. Or an interdependency between a first and a second element may be indirectly affected by an interdependency between the second and a third element, such that a revised value of the third element results in a previously non-existent inconsistency between the second and the first elements.

Embodiments of the present invention provide methods and means of building a complex data model according to rules that enforce structural consistency and integrity in the process of construction of the data model and its constituent parts, while at the same time adapting the rules to account both for evolving states of the data model, and for one or more levels of permissions or privileges associated with users involved in the construction process. A preferred embodiment of the present invention may take the form of a "conflict detection system," which may be implemented as computer-executable software and related data that are stored on a computer-readable storage medium and invoked through execution of the software on a computer-based platform that is itself part of the system. The software may comprise computer-executable instructions for carrying out the various steps and functions described herein for building a complex data model in accordance with a "conflict detection method." The computer-based platform may take the form of one or more distributed platform elements, each comprising one or more general purpose processors, one or more forms of computer-readable storage (such magnetic disks, and solid-state memory, for example), and one or more user interfaces (e.g., computer monitors, keyboards, and the like, which receive user input and provide and display system output) for user interaction with the system. Other components of the platform may include, without limitation, network interfaces and one or more computer networks for communication with possibly distributed components of the system. As such, the system, including the computer-based platform, the computer-readable storage medium, and the software and related data stored on the computer-readable storage medium, comprises means for carrying out the conflict detection method.

In accordance with the preferred embodiment, a rule may be specified for each object of a data model. The rule combines computer-executable instructions and declarative parametric data in order to specify conditions of validity for particular object types. When an object of the particular object type is either created or modified by a user, the rule for the particular type is applied to the object in order to determine the object's validity. Beyond checking the validity of an object's construction, application of the rule further determines a "build state" of the object, which depends not only on the validity of the object with respect to the object type, but also on the identity of the user and on the state of the data model. Then, depending on the build state of the object, the object may be integrated into the data model and the model thereby updated. In this way, errors that can be detected and eliminated early in the integration process can be addressed during those early-phase activities, while errors that are best addressed in later phases can be addressed in the later-phase activities. All of the control for the error detection and correction behavior of the system is preferably specified by the data-driven conflict detection rules.

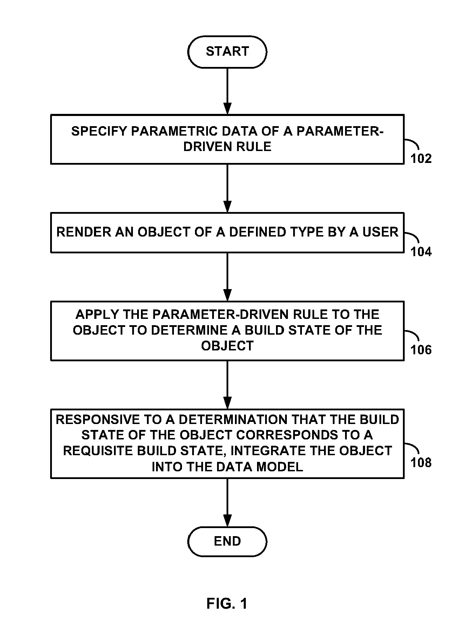

Figure 1 illustrates the preferred embodiment of the conflict detection method in the form of a flowchart. At step 102, parametric data of a parameter-driven rule are specified. The parametric data are preferably stored on a computer-readable storage medium, such as a magnetic disk drive or solid-state memory. For a given type definition, parametric data could comprise (i) one or more definitions of "data element types" that must be included in objects of the given type, (ii) permissible values or ranges of values for elements of the element types in objects of the given object type, (iii) identified interdependencies or associations of elements in objects of the given object type with elements in objects of other object types, and (iv) one or more actions associated with potential conflicts that could be discovered during the validation process. A rule that applies generally to objects of a particular type could also specify greater restrictions when applied to a specifically-identified object of the particular type. Other rule-related information could be included in the parametric data as well, and the above examples should not be viewed as limiting.

The parametric data serve as input to computer-executable software that, when invoked (i.e., executed), implements the rule in accordance with the data. The computer-executable software, stored on a computer-readable storage medium, comprises logic instructions of the parameter-driven rule (or what is sometimes more generally called data-driven software). The parametric data are declarative in the sense that they comprise statement-based data definitions that are stored separately from the computer-executable software of the rule. For example, parametric data could be generated in a text editor by a user, and then stored in a text-based file on a magnetic disk. Alternatively or additionally, the parametric data could be entered into a browser-based form (or other graphical user interface) by a user, and then stored in an XML file. In this way, rules may be flexibly and conveniently configured and revised through generation and updating of the parametric data.

The declarations that comprise the parametric data for one or more rules are also referred to herein as "assertions." In addition to containing and/or defining data, declarations or assertions may also include actions that should be taken during the validation process when an object is found to be in some way non-compliant with respect to the parameter-driven rule or an assertion in the parametric data. This is further explained below.

At step 104, an object of a defined type is "rendered" by a user. The term "render" is used herein to signify an action taken that either creates a new object or modifies (or revises) an existing object. Either action is one that yields an object that will then be subject to one or more forms of consistency, error, or conflict checking with regards to its construction and its appropriateness for integration into the data model. Note that the rendered object includes an identifier, such as a name or tag, and contains information that is used in the data model. The identifier may be used to distinguish the particular object from other objects of the same or different type. Further, the defined type of the object is specified in the parameter-driven rule, in accordance with the parametric data.

As with specifying the parametric data, rendering the object may be accomplished using a text-based editor, a browser-based form, or some other type of interactive development environment. The object itself may take the form of a data structure, database record or table, or the like, for example. The object, once rendered, may be maintained in computer-readable storage, such as a solid-state memory or magnetic disk. Integration of the object into the data model may then be subject to conditions, as determined in the next two steps of Figure 1.

At step 106, the parameter-driven rule is applied to the object to determine a build state of the object. The build state combines validity information with the identity of the user who rendered the object and with a state of the data model in order to determine the suitability of the object for integration into the data model. The validity of the object comprises a "compliance state" of the object with respect to the defined object type, as specified in the rule (including aspects of the specification contained in the parametric data). For instance, the rule may specify that objects of the defined object type must include a certain number (e.g., minimum, maximum, or total) of elements of a given element type. Examples of element types could include scalar or vector numeric variables (e.g., integers, real numbers, etc.), character strings, and data structures, as well as specifications of default values, ranges of values, or other requisite assignments. As noted, these could be defined in the parametric data as assertions, for instance.

The rule could also incorporate interdependencies of element values or ranges of values on information contained in other objects of the same or different type. For example, the rule could specify that a range of values for a particular element is dependent upon a particular value of a different element in a different object. Further, the rule could be revised so as to reflect updates to values of elements in one or more different objects. As an example, a rule could specify a range of values for a particular element of an object based upon a first value of an element in a different object. Then, in response to a later change of the first value to a second value, the range of values could be correspondingly updated. In this way, the type definition of the element as specified in the rule could be revised in accordance with changes in the data model and/or its constituent objects.

Thus the rule could specify an initial type or a revised type definition of one or more elements of the object. In either case, the compliance state of the object would be determined by checking the validity of the rendered object against the rule for objects of that type. To the extent that the rendered object may be determined to be in compliance with certain aspects of the defined object type and out of compliance with others, the compliance state could be represented as levels or degrees of compliance. Alternatively, the compliance state could be binary, represented as either "compliant" or "non-compliant" with no intermediate levels or degrees.

Preferably, the compliance state will be combined with the identity of the user and a state of the data model to determine the build state. The build state of an object signifies the suitability of the object for integration into the data model, and may be associated with a severity code or severity level. For example, the compliance state may specify allowed and/or forbidden transitions between build states.

The user identity and/or the state of the data model may be used to mitigate a degree of non-compliance of an object so that it may still be integrated into the model even if it is not fully compliant. In this case, the integration may be conditioned on subsequent correction of any non-compliance issues. For instance, one user may have privileges to include a non-compliant object, while another may not. Alternatively, user identity may be used to determine whether or not a particular object may even be rendered and what types of rendering are permitted. Moreover, permission to integrate a non-compliant object may be granted if the state of the data model corresponds to an early development/construction phase of the model, while at a later phase permission may be denied.

In addition, assertions may include actions that should be taken when non-compliance is discovered during the validation process. Further, the actions could also be dependent upon the user and the state of the data model. An example of an action is the issuance of an alert or warning message when an element of an object is found to have an improper value. The same non-compliance condition could cause a more severe error if the state of the data model corresponds to a later phase of construction. For instance, a user might be prevented from saving a non-compliant object during the later phase, but not during an earlier phase.

At step 108, a determination is made as to whether the build state of the object corresponds to a requisite build state of the data model, and if so, the object is integrated into the model. For instance, the data model may be stored in the form of a database or an XML file on magnetic disk. Integration may then correspond to writing the object into the file, either as a new object or as a replacement for an existing object. Preferably, the object identifier will be used to determine if the object is new or corresponds to an existing object in the data model. Note that if the state of the model is revised to one that has more stringent requirements (e.g., a change from an early development phase to a completed phase), then a non-compliant object that had previously been permitted to be integrated may now be force out of the model, pending correction of one or more associated non-compliance issues. Alternatively, the model state may be prevented from changing until non-compliance issues are resolved.

Thus, in accordance with the preferred embodiment of the present invention, interactions and interdependencies among objects and elements of a data model are captured in such a way as to incorporate a phase dependency of the data model. The phase dependency, in turn, may be used both to control specific error and consistency checking procedures that are applied as part of the process of rendering data model elements, and to determine the severity level associated with errors and inconsistencies that are detected. For example, a range of acceptable values for an element of a given data model element may evolve with the phase of design and development of an overall system. Similarly, the severity level of errors detected in the assignment of the given element may also change depending of the phase.

One skilled in the art will recognize that there may be many ways to implement and enable the conflict detection method described herein. Application and operation of the present invention are described further below by way of examples. It should be understood that the examples are intended to illustrate the method disclosed herein, and should not be viewed as limiting with respect to the scope and spirit of the present invention.

### 1. Exemplary Embodiment of a Conflict Detection Method and System

An embodiment of a conflict detection method and system may be used to assist a user in detection and correction of errors during the process of building a complex data model. In the course of designing, and building a complex system, developers (e.g., software engineers) must create and/or modify various objects. A preferred embodiment of the present invention in the form a conflict detection method and system will provide error and conflict checking of objects rendered by the developers in a manner that combines validity-checking of the rendered objects with both the identity of individual developers and the phase of construction of the overall data model for the complex system.

In accordance with the preferred embodiment, objects may be added to the data model of the complex system in one of four model phases: "Save," "Submit," "Build," and "Production." These model phases correspond respectively to successively more advanced development phases of the data model. As such, they may be taken as representative of states of the data model. Alternatively, the model phases may be seen as specifying four modes of conflict-detection processing applied to an object to determine if and how the object may be added to the data model. In this alternative, different phases of the data model may exist concurrently, and different objects may be added to the different phases of the data model depending upon the respective modes of conflict detection applied to the different objects.

In the Save phase, an object may be simply saved, possibly even if the object is not fully validated. In the Submit phase, objects are further validated and subject to an audit of their contained elements. In the Build phase, all inter-object links and associations must be resolved. In the Production phase, construction of the data model is complete, and the data model must be ready for used in the complex system. It should be understood that these phases are exemplary of development phases of a data model, and that more or fewer phases could be used.

Before an object of a particular type can be added to any one of the phases of a data model, it must first be validated against the type as specified in the rule for the particular type. The outcome will be one of four compliance states: "Advisory," "Prevent Save," "Release," and "Prevent Release." An Advisory state indicates that some form of conflict has been detected between the object and the type defined in the rule, but it may still be permissible to add the object in some phase of the data model. In contrast, a Prevent Save state indicates a conflict has been detected that makes it impermissible to add the object in any phase of the data model. A Release state indicates that it permissible to add object to any phase of the model, and in particular, to the Production phase. Finally, a Prevent Release state indicates that it is impermissible to add the object to the Production phase, but it may be permissible to add the object to one of the other phases of the data model. As described below, the specific determination as to if and how an object in one of these compliance states may be added to the data model is further conditioned on the phase of the model and an identity of a user (i.e., developer) who rendered the object.

By way of example, Table 1 illustrates several types of conflicts that could be detected during the object validation process. The first column of the table lists the conflict type and the second column gives the associated description. It should be understood that other additional and/or alternative classifications of conflicts are possible as well.

**Table 1**

| **Conflict** | **Description** |
|---|---|
| *Missing Entry* | Proposed delete of item already deleted |
| *ModifyRefdDelete* | Proposed update to item already deleted |
| *DualModified* | Proposed Update to property already changed |
| *Duplicate* | Proposed link already exists |
| *DeleteRelRefdDelete* | Proposed delete of link already deleted |
| *MissingRef* | Proposed link to deleted item |
| *IncompleteItem* | Incomplete Entity |
| *MaxRelsExceeded* | Relationship Cardinality - Maximum Exceeded |
| *MinRelsNotSatisfied* | Relationship Cardinality - Minimum Not Satisfied |
| *OutOfRangeEntity* | Out of Range Entity |
| *IncompleteRel* | Incomplete Relationship |
| *OutOfRangeRel* | Out of Range Relationship |

In accordance with the present embodiment, Table 1 (or a similar organization of data) can be stored on a computer-readable storage medium and can be accessed as part of the object validation process. Determination of the compliance state of a rendered object could then include detection (or lack thereof) of one or more of the conflicts listed in Table 1 as applied to the object and/or elements of the object.

Once a compliance state of an object is determined, a further determination of a build state of the object may be made according to the phase of the data model and possibly to an identity of the user who rendered the object. The build state of the object specifies conditions under which a particular compliance state may be added to the data model. In the present embodiment, five build states are included: "Allow_Save," "Allow_Audit," "Allow_Submit," "Allow_Release," and "Prevent_Add."

Each phase of a data model also includes a set of requisite build states, each set including one or more of the first four build states (i.e., excluding Prevent_Add). In order for an object to be added to a particular phase of the data model, the build state of the object must match one of the requisite build states of the particular model phase. This arrangement is illustrated in Table 2, which lists the requisite build states of the phases of a data model. Each row of the table corresponds to a model phase, and each column to build state. The entry in each table element, either "Yes" or "No," indicates respectively whether or not the build state of the column heading is included in the set of build states for the model phase corresponding to the row. For example, the Save phase includes all four build states ("Yes" in each element of the Save row). Thus an object in any one of the four build states could be added to the Save phase of the model. In contrast, the Production phase includes only the Allow_Release build state ("Yes" only in the last element of the Production row). Thus, only an object in the Allow_Release build state could be added to the Production phase of the model.

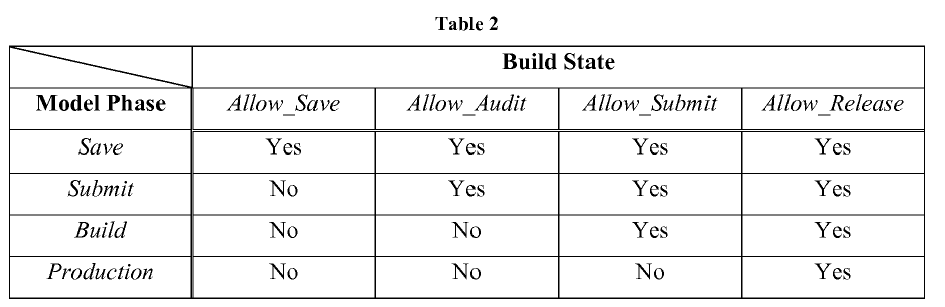

Note that an object that is not in one of the first four build states listed above must then be in the Prevent_Add build state. Since Prevent_Add is not one of the requisite build states for any phase of the data model, an object in the Prevent_Add build state cannot be added to any phase of the model. As with Table 1, Table 2 (or a similar organization the information contained therein) could be stored in and accessed from a computer-readable storage medium.

Specifying a build state from an object's compliance state, the model phase, and a user identity enables the conflict detection system to introduce object-type-specific rules for building the data model. For example, an Advisory compliance state for an object of "type A" may correspond to build state of Allow_Save, while for an object of "type B" an Advisory compliance state may correspond to a build state of Allow_Release, and for an object of "type C" an Advisory compliance state may correspond to a build state of Prevent_Add. Then in this example, the type-A object could be added to the Save phase of the data model, the type-B object could be added to any phase of the data model, and the type-C couldn't be added to any phase of the data model.

Further to this example, the type-C object might be afforded Allow_Save instead of a Prevent_Add build state if the object was rendered by a "supervisory user" instead of a "normal user." Including user identity in the determination of build state may enable the system to allow privileged users (e.g., a supervisory user) to create at save an initial set of incomplete objects at the start of a new project, for instance. Alternatively or additionally, the identity of a user could be used to what rendering actions a different users may undertake. For instance, a "normal user" may be permitted to modify a certain type of existing object, but may not be permitted from initially creating that object. In contrast, a "supervisory user" may be permitted to both create and modify the object. Other types of access and action controls may be implemented according to user identity, and these examples should not be viewed as limiting.

The different build states determined for different objects of the same compliance state illustrates how complexity that is inherent in the design and construction of a data model may be incorporated into the conflict detection and correction of the present embodiment of the conflict detection system. In the example above, the distinction between objects is based on object type. Additional, examples presented below illustrate how the distinction can be extended to include specific objects of the same type.

When an object is added to a phase of a data model according to the object's build state, the conflict detection system may take additional actions, such as issuing a message to the user, or flagging an object to indicate that corrective action must be taken. For example, the type-A object above may be added to the Save phase of the data model. However, since the object is in an Advisory compliance state, some form of correction to a detected conflict must be made before the object can be added to any later phase of the data model, and the conflict detection system could issue an alert or warning to the user advising of the required action. Similarly, the system may issue an error message for the type-C object, indicating that corrective action for any detected conflicts must be taken. Other actions and messages are possible as well.

While the above description depicts the determination of a compliance state and a build state as separate steps, in practice, the assertions that are applied to an object preferably combine the conditions of compliance state and build state, as well as an identity of the user or developer who rendered the object in question. Nevertheless, the discussion of determination of compliance state and build state as separate logical steps is convenient for the purposes of illustrating the complex form of conflict detection and correction supported within the present embodiment.

### 2. Exemplary Application to a Diagnostic Maintenance System

The conflict detection system described above can be applied to development of a data model for a diagnostic maintenance system. Such a maintenance system may be adapted for use in testing and trouble-shooting complex systems such as aircrafts, manufacturing facilities, and telecommunications switches, to name a few examples. While a system that is the target of maintenance and testing may be complex in its own right (as in the case of the above three examples), in the present illustration the diagnostic maintenance system itself represents the complex system of interest, and an exemplary embodiment of the conflict detection method is applied to construction of a data model for the diagnostic system. For the sake of brevity, the description of the data model is considerably simplified and abbreviated from what an actual implementation would likely entail. However, the simplified description serves to illustrate the method, and it should not be taken as limiting with respect to the present invention. Further, for purpose of this discussion the system that is subject to maintenance and testing (e.g., an aircraft or telecommunications switch) shall be referred to simply as the "target system." Note that the target system itself could well be represented by a data model. However, in the context of the present discussion, the target system shall remain generic.

In practice, the diagnostic maintenance system can be implemented as a computer-executable software program that is stored on computer-readable media. The methods and procedures of the system are carried out by executing the program on a computer-based platform that is itself part of the system. In one embodiment, the diagnostic maintenance system is logically linked (e.g., via computer-executable instructions) to a software-based model of the target system, which represents the target system in the form of computer-executable simulation, for instance. The software-based model of the target system may include a data model that is the same or similar to the data model of the actual target system. The diagnostic maintenance system preferably includes a graphical user interface that allows a user to select various tests and trouble-shooting diagnostic functions that may be applied to subsystems or other components and aspects of the target system (as represented by the software-based model of the target system). The graphical user interface preferably includes means for both receiving user input (e.g., for driving or invoking one or more tests) and presenting output (e.g., for communicating test results). These are just a few exemplary operations that may be available to a user of the diagnostic maintenance system.

The exemplary diagnostic maintenance system comprises functional elements for running tests, linking tests to specific subsystems of the target system, setting test parameters, and displaying test results, among other functions. The data model for the diagnostic maintenance system incorporates objects that support and drive operation of the test-focused functional elements of the system. By way of example, three types of objects are described herein: "diagnostic_test," "target_subsystem," and "comm_screen." The data model will include one or more of each type of object, each rendered according to a respective definition specified in a respective rule and one or more associated assertions, as described above. In practice, there will be other types of objects in the data model of the diagnostic maintenance system, but discussion of just these three suffice for purposes of the present illustration. In the present discussion, the specification of each of the three types of objects above are illustrative of a objects in a complex data model used to model and/or drive a complex system. In addition, two other types of objects, "fault_report" and "LRU" (short for "line replaceable unit"), are also mentioned but not discussed in any detail.

In brief, a target_subsystem is an object that represents an actual subsystem of the target system that may be subject to diagnostic testing. A diagnostic_test is an object that corresponds to a functional element of the diagnostic maintenance system that supports running a test. A comm_screen is an object that corresponds to a functional element of the diagnostic maintenance system that is used by a diagnostic test to communicate messages and information to a user of the diagnostic maintenance system. As such, it supports functionality of one or more forms of graphical user interface. Further details about each type of object and their associations with each other serve to exemplify application of the conflict detection system to the data model for the diagnostic maintenance system.

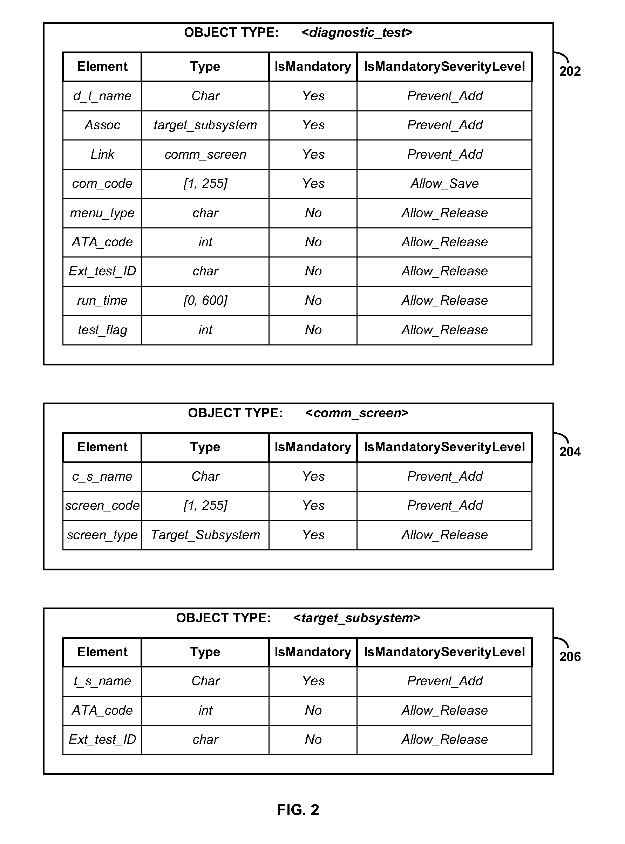

Figure 2 illustrates a possible organization of parametric data for defining object types and assertions associated with elements of object types. Each object type is specified in an "entity rule" that comprises one or more declarations or assertions, each including an element identifier, ("Element"), an element type ("Type"), an inclusion requirement ("IsMandatory"), and a severity level condition that is applied if the inclusion requirement is not met ("IsMandatorySeverityLevel"). Entity rules could be implemented as data structures that are stored on a computer-readable storage medium. For example, one or more such data structures could be part of a text-based file, such as an XML file. Alternatively, entity rules could be records or tables in a database. Other implementations are possible.

Note that the severity level condition may include a compliance state or build state as well as identification of a computer-executable program to be executed if the condition is encountered. Because assertions are declarative, program identification can be conveniently modified by editing or otherwise updating the file(s), database, or other storage format used for entity rules. Thus, programs for handling detected conflicts can be swapped or changed as necessary. In this sense, they may be viewed as so-called "plug-n-play" components of assertions. It should be understood that the particular organization of the entity rules shown in Figure 2 is exemplary, and that other forms are possible.

Entity rule 202 in Figure 2 comprises element type definitions and assertions for the diagnostic_test object type. As indicated, a diagnostic_test object includes a test name, specified in an element called "d_t_name," an association with at least one target_subsystem object and a link to a comm_screen-type object. All three of these elements are required, as indicated by the inclusion requirement marked "Yes." The absence of any one of these elements in a diagnostic_test object will prevent the object from being added to any phase of the data model, as indicated by the Prevent_Add entry under the severity level condition.

A diagnostic_test must also include a command code, specified in an element called "com_code," used for controlling one or more aspects of test operation. The absence of this element will result in an object that can be added to the Save phase of the data model, but not to any later phases. In addition, a diagnostic_test object may include elements of types "menu_type," "ATA_code," "Ext_test_ID," "run_time," and "test_flag," each of which are optional. A diagnostic_test object could be added to any phase of the data model without these elements, as indicated by the Allow_Release entry under the severity level condition for these elements.

Entity rule 204 comprises element type definitions and assertions for the comm_screen object type. As indicated, comm_screen objects must have a name, specified in an element called "c_s_name" and a "screen_code" element. If either is missing, a comm_screen object cannot be added to any phase of the data model. A "screen_type" element must also be included, although without it, a comm_screen object can be added to any phase of the data model except the Production phase.

Entity rule 206 comprises element type definitions and assertions for the target_subsystem object type. The target_subsystem object is required to have a name, and may optionally include ATA_code and Ext_test_ID elements.

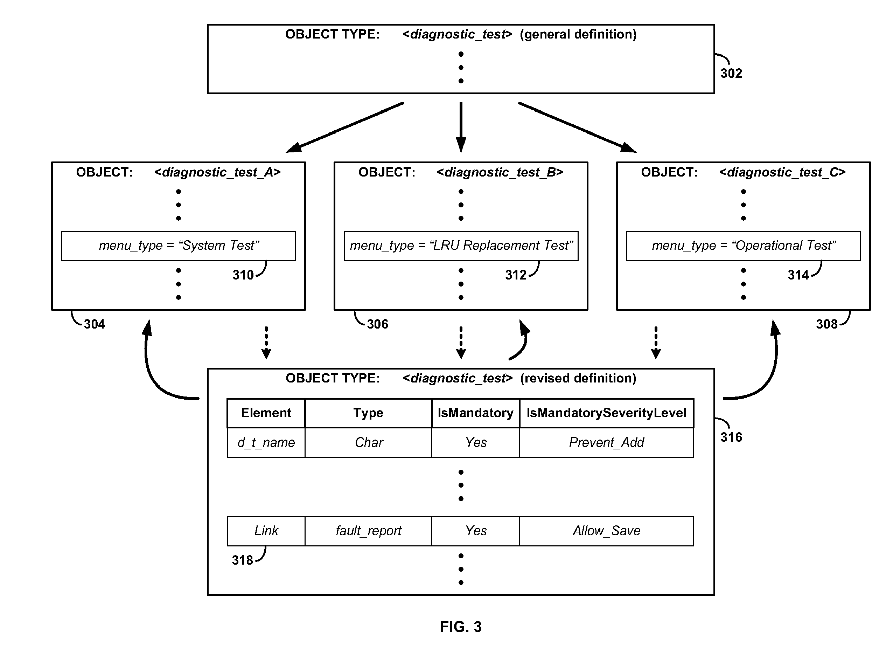

The object type rules illustrated in Figure 2 preferably apply in a general way to objects rendered of the respective types. The exemplary conflict detection method and system advantageously accommodates revision of object-type definitions according to information contained in actual rendered objects. This is illustrated in Figure 3, which shows how particular instances of a diagnostic_test object type may be subject to revised type definitions. In the figure, entity rule 302 for a generally-defined diagnostic_test object type is initially applied (as indicated by the three solid downward arrows) to rendering three objects (304, 306, and 308), identified as "diagnostic_test_A," "diagnostic_test_B," and "diagnostic_test_C." As with entity rules, objects may be stored on computer-readable media as data structures in a text-based file, or as records or tables in a database. Other storage formats are possible as well. In object 304 the menu_type 310 is set to "System Test." Similarly, in object 306 the menu_type 312 is set to "LRU Replacement Test," and in object 308 the menu_type 314 is set to "Operational Test." While menu_type is an optional element of the generally-defined diagnostic_test object type, setting it as indicated in objects 304, 306, or 308 evidently requires that the diagnostic_test object type be revised to include an element that is a link to an object of type fault_report. This is indicated by the dashed downward arrows to entity rule 316, which comprises the revised definition that includes link 318. The revised definition in entity rule 316 is then applied to objects 304, 306, and 308, as indicated by the upward curved arrows. Note that the vertical ellipses in the entity rules and objects in Figure 3 are meant to represent other elements, such as those discussed above in connection with Figure 2.

While this example shows how a particular value or setting of an element in an object may result in a revision of the object-type definition for the object, the same manner of revision can also be associated with a particular value or setting of an element in a different object. For instance, as described above, a diagnostic_test object must include a link to a comm_screen object. If a rendered diagnostic_test object is linked to a specific comm_screen object having a particular ATA_code, the type definition for the diagnostic_test object may be similarly revised. Other examples of interdependencies between objects and their respective type definitions are possible as well.

### 3. An Alternative Embodiment of a Conflict Detection Method and System

The conflict detection method and system may be further exemplified by considering an alternative embodiment in which an object is included or integrated into a data model in one of a plurality of build states, wherein entry of the object into a build state is controlled, at least in part, by the object's compliance state. In accordance with this alternative embodiment, during the course of data model development an object generally transitions across progressively more advanced build states, some of which are prerequisites for the object being added to the model, and others which may apply to the object after it is admitted to the model. The data model itself only contains production-ready objects, but the status (build state and/or compliance state) of any one or more objects may be revised from time to time according to further object renderings and/or a phase of the data model. The phase of the data model could, in turn, correspond to the developmental readiness of the data model to be applied to or used in a complex system driven by or modeled by the data model.

Table 3 illustrates the relationship between the build states and the compliance states of objects. Each row of the table corresponds to a build state, and each column to a compliance state. Five build states are included in the alternative embodiment: "New," "Saved," "Submitted," "Audited," and "Released." Similarly, five compliance states are included: "Prevent_Save," "Prevent_Search," "Prevent_Submit," "Prevent_Release," and "No_Conflict." Table entries are either "Yes" or "No" depending on whether the build state of a row respectively will or will not admit an object that is in the compliance state of an intersecting column. For example, the New build state will admit objects in any compliance. By comparison, the Submitted build state will admit objects in either the Prevent_Release or No_Conflict compliance states, but not objects in any of the other compliance states. As with Tables 1 and 2, Table 3 (or a similar organization the information contained therein) could be stored in and accessed from a computer-readable storage medium.

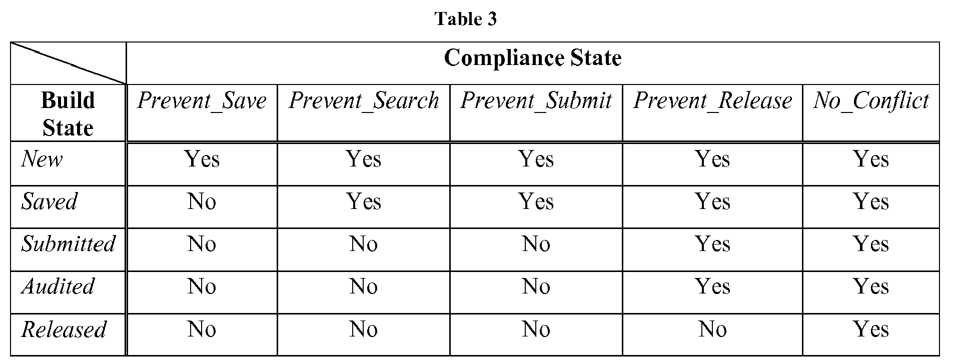

The ordering of build states in Table 3 from New through Released represents a progression from less advanced to more advanced. For an object to progress from a less advanced to a more advanced build state, it must transition through any intermediate build states (or at least meet any requirements for those intermediate build states). In turn, any build-state transition (from less to more advanced) of an object must be permitted by the object's compliance state. To this end, each of the first four compliance states in Table 3 (starting with Prevent_Save) is determinative of a forbidden build-state transition.

Accordingly, a "Yes" in a given entry in Table 3 indicates that an object in the compliance state of the given entry is permitted to transition to the build state of the given entry. Conversely, a "No" in a given entry indicates that an object the compliance state of the given entry is forbidden from transitioning to the build state of the given entry. For instance, an object in the Prevent_Save compliance state is forbidden from transitioning from the New build state to the Saved build state or any more advance build state. Note that New build state is the only one that admits the Prevent_Save compliance state, since any more advanced build state must already have met at least the requirements for the Saved build state. Similarly, an object in the Prevent_Search compliance state is forbidden from transitioning to the Submitted (or more advanced) build state, but may transition to either the New or Saved build states.

The compliance state of an object is determined by applying a parameter-driven rule to the object. As with the previous embodiments described above, parametric data for the rule may be stored on a computer-readable storage medium and may comprise declarations of object definitions and associated assertions. In accordance with the alternative embodiment, the process of applying a rule to an object to determine the object's compliance state is referred to as running or executing a "conflict check." Table 1 of the previous embodiment gives examples of conflicts that may be discovered from a conflict check run on an object, and may then result in the object being classified into one of the compliance states in Table 3.

The significance of each build state in Table 3 may be summarized as follows. In the New build state, an object has not yet been saved. For instance, the object may be created in a text editor and stored in temporary memory associated with the editor while a user modifies or otherwise edits the contents of the object. In the Saved build state, the object has been saved to persistent storage, such as file on a magnetic disk. In accordance with the discussion above, a New object will not be allowed to be saved if a conflict check on the New object results in a Prevent_Save compliance state. In this case, the object must be modified to correct any conflicts that yield the Prevent_Save compliance state, otherwise it will not be possible to save the object.

In the Saved state, an object has at least met minimum compliance requirements to avoid or correct any conflicts that would result in a Prevent_Save compliance state. However, there may still be conflicts that prevent further build-state transitions. In the Submitted state, a conflict check on the object may indicate that the object is valid within a limited local or internal scope. For example, the object may be valid with respect to a subset of other objects relating to one subsystem, but may not have had its validity checked with respect to all subsystems. Further to this example, critical values in the object may have been verified, and local or internal interdependencies may have been resolved between the object and a particular group of objects related to a certain subsystem of a complex system. However, there may be a different subsystem of the complex system with a different group of related objects that has not yet been created or saved. If there are global interdependencies between the object and the different group of objects, then it may not be possible to resolve them. Under these conditions, a conflict check will preferably result in a Prevent_Search compliance state. Then according to Table 3, the object will not be allowed to transition to the Submitted state.

Alternatively or additionally, even if a search is permitted, the result may be one or more conflicts that yield a Prevent_Submit compliance state. For instance, all objects required to attempt a resolution of interdependencies may be present, but the result of the attempt may be a discovery of conflicts or inconsistencies that prevent proper resolution. In this case, the Prevent_Submit compliance state would be appropriate. Again, the object will not be allowed to transition to the Submitted build state.

Once all values may be verified and all interdependencies resolved, the object is ready to be released into the production data model. At this point, the object may transition into the Audited build state. This state indicates that the object is ready for release, but there may still be global issues that need to be resolved. In this case, a conflict check results in the Prevent_Release compliance state. For instance, even though global interdependencies may have been resolved, there could be a requirement on the sequencing of releasing objects such that an audited object must await the release of a different object before the audited object may itself be released. Under these conditions, the audited object is held up from release by virtue of its Prevent_Release build state.

Finally, when an object is permitted to be release to the production data model, a conflict check will yield the No_Conflict compliance state. In this state the object may transition to the Released build state, at which point it is considered to be fully integrated into the data model.

Note that the production data model itself may transition through various phases associated with its development and construction. In accordance with the alternative embodiment, the compliance states associated with various conflicts may be adjusted in correspondence with the phase of the data model. For instance, a conflict that results in a Prevent_Search compliance state during an early phase of the model may result in a Prevent_Save compliance state during a later phase. Thus, an object with a particular conflict may be allowed to be saved during an early phase of the model, but not during a later phase of the model. The effect of such a model-phase dependency of compliance states is to make conflict checks stricter as the model phase advances.

As a related aspect of the alternative embodiment, if an object has a conflict that results in a Prevent_Search compliance state during an early phase of a data model, then the object may be saved, as just noted. If during a later phase, the same conflict corresponds to a Prevent_Save compliance state, then the object will find itself in a Saved build state, but with a Prevent_Save compliance state. More generally, an object's compliance state may regress as the model phase advances, even if the object has not been modified. In such an instance the conflict detection method and system will preferably generate a message, alert, or other communication indicating that the relevant conflict or conflicts must be fixed. In a similar way, an object released to a production data model during an early model phase may later find itself in a Prevent_Release (or less advanced) compliance state as a result of a more advanced phase of the model. Again, the conflict detection method and system will preferably generate a message, alert, or other communication indicating that the relevant conflict or conflicts must be fixed.

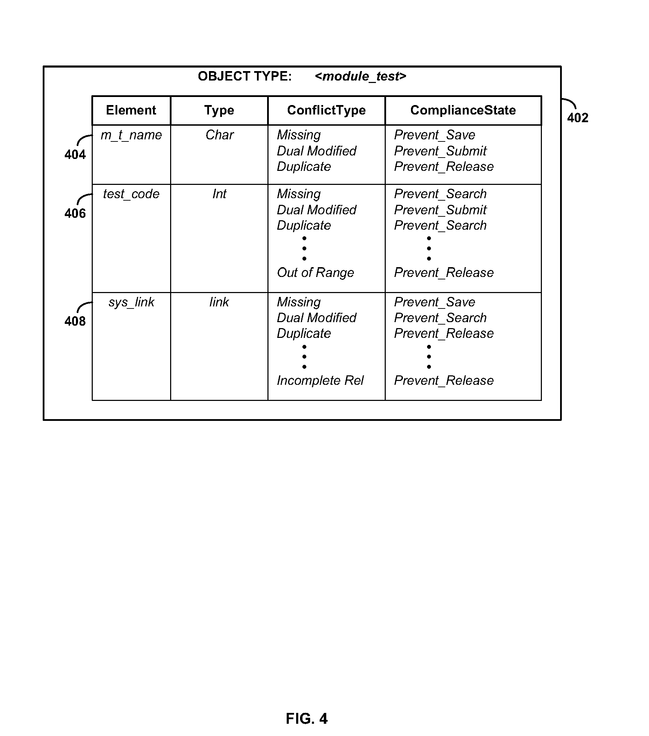

The alternative embodiment of the conflict detection method and system may be further understood by considering exemplary operation. Figure 4 depicts an example object type definition in the form of an entity rule 402, which is may be implemented as a data structure in a file or a data table in a database and stored in computer-readable storage medium, for instance. Entity rule 402 includes, by way of example, three element definitions: "m_t_name" 404, "test_code" 406, and "sys_link" 408. Each element definition includes an element name, element type, a "ConflictType" attribute, and a "ComplianceState" attribute. The ConflictType for each element definition comprises a list of possible conflicts that can be detected for the element, while the ComplianceState comprises a corresponding list of compliance states for each conflict type.

As indicated in entity rule 402, a newly-created object of type module_test must include an element for m_t_name. For instance, a user may create the object in a text editor. Upon an attempt to save the object, a conflict check preferably will be invoked. A conflict check may also be invoked by a specific command or instruction by the user. If the conflict check detects that an element corresponding to m_t_name is missing, then the check will yield a ConflictType of "Missing," resulting in a compliance state of Prevent_Save. In this case, referring to Table 3, the conflict detection system would prevent the object from transitioning to the Saved build state. Similarly, if sys_link 408 is missing, the object will not be allowed to be saved. In contrast, if test_code 406 is missing, the build state will be Prevent_Search, so the object can be saved, but may not transition to the Submitted build state. Other conflict types for each object will result in other compliance states, as indicated in the figure.

### 4. Conclusion

An exemplary embodiment of the present invention has been described above. Those skilled in the art will understand, however, that changes and modifications may be made to the embodiment described without departing from the true scope and spirit of the invention, which is defined by the claims.

## Claims

1. A computer-implemented method of constructing a data model for modeling a complex system, the data model comprising a plurality of objects and being stored on a computer-readable storage medium, the method comprising the steps of:
specifying parametric data of a parameter-driven rule, the parametric data being stored on the computer-readable storage medium;
rendering a first object of a defined type by a user, the first object including a particular identifier and containing information used by the data model, and the defined type being specified in the parameter-driven rule in accordance with the parametric data;
applying the parameter-driven rule to the first object to determine a build state of the first object, the build state of the first object depending on (i) a state of compliance of the first object with the parameter-driven rule, (ii) an identity of the user, and (iii) a state of the data model; and
responsive to determining that the build state of the first object corresponds to a requisite build state, modifying the data model stored on the computer-readable storage medium by integrating the first object into the data model.

2. The method of claim 1, wherein rendering the first object of the defined type comprises creating a new object of the defined type.

3. The method of claim 1, wherein rendering the first object of the defined type comprises modifying an existing object of the defined type.

4. The method of claim 1, wherein applying the parameter-driven rule to the first object comprises determining the state of compliance of the first object with the parameter-driven rule by validating the first object against the defined type specified in the parameter-driven rule.

5. The method of claim 4, wherein the parameter-driven rule comprises a requirement that objects of the defined type must include a requisite number of object elements of a defined object-element type, and validating the first object against the defined type specified in the parameter-driven rule comprises:
specifying the state of compliance as compliant upon a determination that the first object includes the requisite number of object elements of the defined object-element type; and
specifying the state of compliance as non-compliant upon a determination that the first object fails to include the requisite number of object elements of the defined object-element type.

6. The method of claim 1, wherein applying the parameter-driven rule to the first object comprises:
in accordance with information contained in at least a second object, revising the defined type specified in the parameter-driven rule; and
determining the state of compliance of the first object with the parameter-driven rule by validating the first object against the revised defined type specified in the parameter-driven rule.

7. The method of claim 6, wherein the parameter-driven rule comprises a requirement that objects of the defined type must include a data element having a value between a minimum value and a maximum value, and revising the defined type specified in the parameter-driven rule comprises revising at least one of the minimum value and the maximum value.

8. The method of claim 1, wherein:
the parameter-driven rule is implemented as computer-executable software that (i) is stored separately from the parametric data on the computer-readable storage medium, and (ii) comprises machine-language instructions for carrying out logical steps in accordance with information contained in the parametric data, and
applying the parameter-driven rule to the first object comprises executing the software on a computer, wherein executing the software comprises accessing and using the parametric data to carry out the logical steps.

9. The method of claim 1, wherein applying the parameter-driven rule to the first object comprises determining the build state of the first object by using both the state of the data model and the identity of the user to further specify the state of compliance of the first object with the parameter-driven rule.

10. The method of claim 1, wherein the data model includes a list of requisite build states for objects in the data model, and integrating the first object into the data model comprises:
upon a determination (i) that the build state of the first object matches at least one of the requisite build states, and (ii) that the data model includes an existing object with the particular identifier, updating the data model by replacing the existing object with the first object in the data model;
upon a determination (i) that the build state of the first object matches at least one of the requisite build states, and (ii) that the data model does not include an existing object with the particular identifier, updating the data model by adding the first object to the data model;
upon a determination that the build state of the first object fails to match at least one of the requisite build states, refusing to update the data model with the first object; and
issuing a message indicating both the build state of the first object and whether the data model was updated.
